# EUROPEAN PATENT APPLICATION

(11) **EP 2 993 869 A1**
(43) Date of publication of application: **09.03.2016**
(21) Application number: 14892879.9
(22) Date of filing: 30.05.2014
(51) Int. Cl.: H04M 1/02

(54) **TERMINAL DEVICE, AND METHOD FOR FIXING OR UNLOCKING FUNCTION CARD OF TERMINAL DEVICE**

(71) Applicant: Huawei Technologies Co., Ltd, Shenzhen, Guangdong 518129 (CN)
(72) Inventor: CHEN, Xi, Shenzhen City Guangdong 518129 (CN)
(74) Representative: Gill Jennings & Every LLP
(86) International application number: PCT/CN2014/078889
(87) International publication number: WO 2015/180118

(57) **Abstract**

The present application discloses a terminal device and a method for fastening or unlocking a functional card of the terminal device. The terminal device includes a card container, a fastening apparatus, and a processor, where: the card container is configured to contain a functional card, and a notch is disposed on the card container; the fastening apparatus includes an extensible part, and the extensible part stretches into the notch to fasten the card container, or moves away from the notch to unlock the card container; and the processor is configured to: determine, according to authentication information entered by a user, whether the authentication information is correct, and control, when the authentication information is correct, the extensible part of the fastening apparatus to stretch into the notch to fasten the card container, or move away from the notch to unlock the card container. In this manner, the functional card can be detached only when the entered authentication information is correct, and therefore, the functional card is prevented from being randomly detached.

## Description

### TECHNICAL FIELD

The present application relates to the field of communications technologies, and in particular, to a terminal device and a method for fastening or unlocking a functional card of the terminal device.

### BACKGROUND

An existing terminal device is generally equipped with a functional card, for example, a smart card and a memory card. The smart card stores content such as information about a digital mobile phone user, a cipher key, an address book of the user; the memory card stores data of the user, and the like. Nowadays, the functional card is generally randomly-detachable. However, on some occasions, the user expects the functional card not to be randomly detached. For example, after the user's terminal is stolen, if a thief can randomly change the smart card, the thief can randomly use the stolen telephone, thereby causing a loss to the user.

### SUMMARY

Embodiments of the present invention provide a terminal device and a method for fastening or unlocking a functional card of the terminal device, which can fasten or unlock a functional card, and prevent the functional card from being randomly detached.

A first aspect of the present application provides a terminal device, where the terminal device includes a card container, a fastening apparatus, and a processor, where: the card container is configured to contain a functional card, and the card container has a notch; the fastening apparatus includes an extensible part, and the extensible part stretches into the notch to fasten the card container, or moves away from the notch to unlock the card container; and the processor is configured to: determine, according to authentication information entered by a user, whether the authentication information is correct, and control, when the authentication information is correct, the extensible part of the fastening apparatus to stretch into the notch to fasten the card container, or move away from the notch to unlock the card container.

With reference to the first aspect, in a first possible implementation manner of the first aspect of the present application, the fastening apparatus further includes a restricting part, where the restricting part restricts a degree of freedom of the extensible part, so that the extensible part moves along a direction to the notch; and under control of the processor, the extensible part stretches into the notch to fasten the card container, or moves away from the notch to unlock the card container.

With reference to the first possible implementation manner of the first aspect, in a second possible implementation manner of the first aspect of the present application, the restricting part is a nut, the extensible part includes a motor and a screw rod, one end of the screw rod is connected to the motor, and the motor drives, under control of the processor, the screw rod to move through the nut, so that the screw rod stretches into the notch or moves away from the notch.

With reference to the first possible implementation manner of the first aspect, in a third possible implementation manner of the first aspect of the present application, the restricting part is a restricting ring, the extensible part includes an electromagnetic coil and a magnetic rod, one end of the magnetic rod is connected to the electromagnetic coil, and the electromagnetic coil drives, under control of the processor, the magnetic rod to move through the restricting ring, so that the magnetic rod stretches into the notch or moves away from the notch.

With reference to the first aspect, in a fourth possible implementation manner of the first aspect of the present application, the fastening apparatus further includes a spring and an electromagnetic coil, the restricting part is a lock tongue, one end of the lock tongue has a bevel, and the other end of the lock tongue is connected to the spring through the electromagnetic coil; when the card container moves, the card container pushes against the bevel of the lock tongue, so that the spring is elastically deformed, and when the notch faces the lock tongue, the lock tongue stretches into the notch under action of the spring, thereby fastening the card container; and that the processor is configured to control the extensible part of the fastening apparatus to stretch into the notch to fasten the card container, or move away from the notch to unlock the card container is specifically: the electromagnetic coil magnetizes the lock tongue under control of the processor to generate a magnetic force, so that the lock tongue moves away from the notch under action of the magnetic force, thereby unlocking the card container.

With reference to the first aspect and the first to the fourth possible implementation manners of the first aspect, in a fifth possible implementation manner of the first aspect of the present application, the authentication information entered by the user is at least one of a password entered by the user, fingerprint information entered by the user, and iris information entered by the user.

With reference to the first aspect and the first to the fifth possible implementation manners of the first aspect, in a sixth possible implementation manner of the first aspect of the present application, the functional card is any one of a SIM card, a USIM card, an SD card, and a TF card.

With reference to the first aspect and the first to the sixth possible implementation manners of the first aspect, in a seventh possible implementation manner of the first aspect of the present application, the terminal device is a mobile phone, a tablet, a wearable device, or a digital camera.

A second aspect of the present application provides a method for fastening or unlocking a functional card of a terminal device, where the terminal device includes a card container and a fastening apparatus, where the card container is configured to contain the functional card, and the card container has a notch; the fastening apparatus includes an extensible part, and the extensible part stretches into the notch to fasten the card container, or moves away from the notch to unlock the card container; and the method includes: receiving authentication information entered by a user; determining whether the authentication information entered by the user is correct; and if the authentication information entered by the user is correct, controlling the extensible part of the fastening apparatus to stretch into the notch to fasten the card container, or move away from the notch to unlock the card container.

With reference to the second aspect, in a first possible implementation manner of the second aspect of the present application, the fastening apparatus further includes a restricting part, and the restricting part restricts a degree of freedom of the extensible part, so that the extensible part moves along a direction to the notch, where the restricting part is a nut, the extensible part includes a motor and a screw rod, and one end of the screw rod is connected to the motor; and the step of controlling the extensible part of the fastening apparatus to stretch into the notch to fasten the card container, or move away from the notch to unlock the card container is specifically: controlling the motor to drive the screw rod to move through the nut, so that the screw rod stretches into the notch to fasten the card container, or moves away from the notch to unlock the card container.

With reference to the second aspect, in a second possible implementation manner of the second aspect of the present application, the fastening apparatus further includes a restricting part, and the restricting part restricts a degree of freedom of the extensible part, so that the extensible part moves along a direction to the notch, where the restricting part is a restricting ring, the extensible part includes an electromagnetic coil and a magnetic rod, and one end of the magnetic rod is connected to the electromagnetic coil; and the step of controlling the extensible part of the fastening apparatus to stretch into the notch to fasten the card container, or move away from the notch to unlock the card container is specifically: controlling the electromagnetic coil to drive the magnetic rod to move through the restricting ring, so that the magnetic rod stretches into the notch to fasten the card container, or moves away from the notch to unlock the card container.

With reference to the second aspect, in a third possible implementation manner of the second aspect of the present application, the fastening apparatus further includes a spring and an electromagnetic coil, the extensible part is a lock tongue, one end of the lock tongue has a bevel, and the other end of the lock tongue is connected to the spring through the electromagnetic coil; when the card container moves, the card container pushes against the bevel of the lock tongue, so that the spring is elastically deformed, and when the notch faces the lock tongue, the lock tongue stretches into the notch under action of the spring to fasten the card container; and the step of controlling the extensible part of the fastening apparatus to stretch into the notch to fasten the card container, or move away from the notch to unlock the card container is specifically: controlling the electromagnetic coil to magnetize the lock tongue to generate a magnetic force, so that the lock tongue moves away from the notch under action of the magnetic force to unlock the card container.

In the foregoing solutions, a notch is disposed on a card container, and when authentication information is correct, an extensible part of a fastening apparatus is controlled to stretch into the notch to fasten the card container, or move away from the notch to unlock the card container. In this manner, a functional card can be detached only when the authentication information is correct, and therefore, the functional card is prevented from being randomly detached.

### BRIEF DESCRIPTION OF DRAWINGS

FIG. 1 is a schematic structural diagram of an implementation manner of a terminal device according to the present application;
FIG. 2 is a schematic diagram of a specific implementation manner of the terminal device shown in FIG. 1;
FIG. 3 is a schematic diagram of another specific implementation manner of the terminal device shown in FIG. 1;
FIG. 4 is a schematic structural diagram of another implementation manner of a terminal device according to the present application;
FIG. 5 is a schematic diagram of a fastened state in another implementation manner of a terminal device according to the present application; and
FIG. 6 is flowchart of an implementation manner of a method for fastening or unlocking a functional card of a terminal device according to the present application.

### DESCRIPTION OF EMBODIMENTS

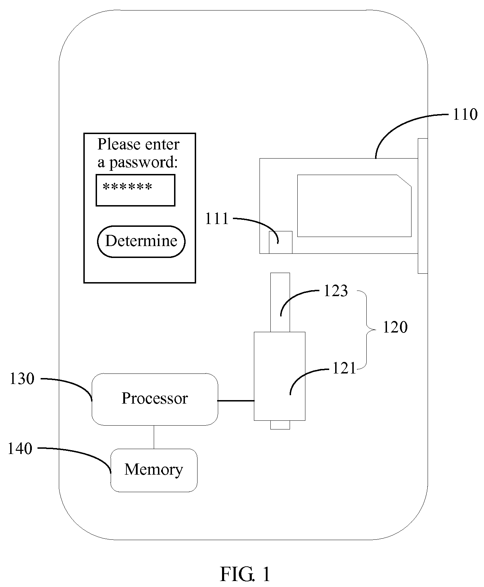

Referring to FIG. 1, FIG. 1 is a schematic structural diagram of an implementation manner of a terminal device according to the present application. The terminal device may be a mobile phone, a tablet, a wearable device, or a digital camera. The terminal device in this implementation manner includes: a card container 110, a fastening apparatus 120, and a processor 130.

The card container 110 is configured to contain a functional card, and a notch 111 is disposed on the card container 110. The functional card may be any one of a SIM card, a USIM card, an SD card, and a TF card.

The fastening apparatus 120 includes an extensible part 123, and the extensible part 123 stretches into the notch 111 to fasten the card container 110, or moves away from the notch 111 to unlock the card container 110.

The processor 130 is configured to: determine, according to authentication information entered by a user, whether the authentication information is correct, and control, when the authentication information is correct, the extensible part 123 of the fastening apparatus 120 to stretch into the notch 111 to fasten the card container 110, or move away from the notch 111 to unlock the card container 110.

In the foregoing solution, a notch 111 is disposed on a card container 110, and when authentication information is correct, a processor 130 controls an extensible part 123 of a fastening apparatus 120 to stretch into the notch 111 to fasten the card container 110, or move away from the notch 111 to unlock the card container 110. In this manner, a functional card can be detached only when the authentication information is correct, and therefore, the functional card is prevented from being randomly detached.

Further, the fastening apparatus 120 further includes a restricting part 121, where the restricting part 121 is configured to restrict a degree of freedom of the extensible part 123, so that the extensible part 123 moves along a direction to the notch 111.

The processor 130 may be a general purpose processor, a digital signal processor (DSP), an application-specific integrated circuit (ASIC), a field programmable gate array (FPGA) or another programmable logic device, a transistor logic device, or a discrete hardware component.

Further, the terminal device may further include a memory 140, where the memory 140 may be a component that can store data even in a power outage situation, and the memory 140 can store authentication information. The memory 140 may include a read-only memory and a random access memory, and provide an instruction and data to the processor 130. A part of the memory 140 may further include a nonvolatile random access memory (NVRAM).

When fastening, the user first inserts the functional card into the card container 110, and then inserts the card container 110 into the terminal device. Afterwards, the user enters authentication information. The processor 130 compares the authentication information with the authentication information stored in the memory 140, so as to determine whether the authentication information is correct. When the authentication information is correct, the processor 130 controls the extensible part 123 of the fastening apparatus 120 to stretch into the notch 111 to fasten the card container 110, so that the card container 110 and the functional card cannot be detached.

When unlocking, the user enters authentication information. The processor 130 receives the entered authentication information, and compares the authentication information with the authentication information stored in the memory 140, so as to determine whether the authentication information is correct. When it is determined that the authentication information is correct, the processor 130 controls the extensible part 123 of the fastening apparatus 120 to move away from the notch 111 to unlock the card container 110, so that the card container 110 and the functional card can be detached.

In the foregoing solution, a notch is disposed on a card container, and when authentication information is correct, an extensible part of a fastening apparatus is controlled to stretch into the notch to fasten the card container, or move away from the notch to unlock the card container. In this manner, a functional card can be detached only when an entered password is correct, and therefore, the functional card is prevented from being randomly detached.

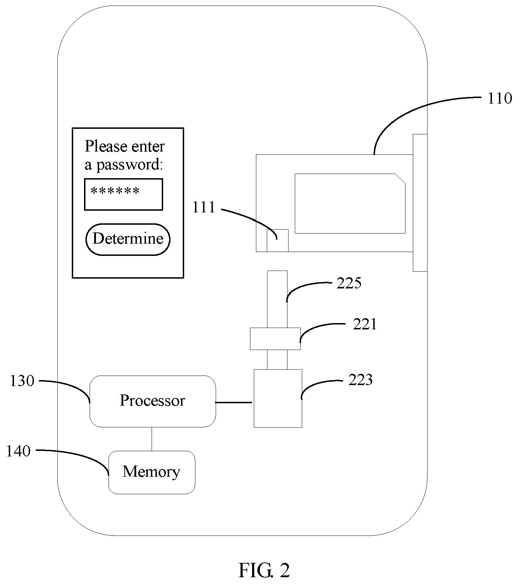

Referring to FIG. 1 and FIG. 2, FIG. 2 is a schematic diagram of a specific implementation manner of the terminal device shown in FIG. 1, where the restricting part 121 is a nut 221, the extensible part 123 includes a motor 223 and a screw rod 225, and one end of the screw rod 225 is connected to the motor 223.

When fastening, the user first inserts the functional card into the card container 110, and then inserts the card container 110 into the terminal device. Afterwards, the user enters authentication information. The processor 130 compares the authentication information entered by the user with the authentication information stored in the memory 140, so as to determine whether the authentication information is correct. When the authentication information is correct, the motor 223 drives, under control of the processor 130, the screw rod 225 to move through the nut 221, so that the screw rod 225 stretches into the notch 111.

When unlocking, the user enters authentication information. The processor 130 receives the entered authentication information, and compares the authentication information with the authentication information stored in the memory 140. When it is determined that the entered authentication information is correct, the motor 223 drives, under control of the processor 130, the screw rod 225 to move through the nut 221, so that the screw rod 225 moves away from the notch 111.

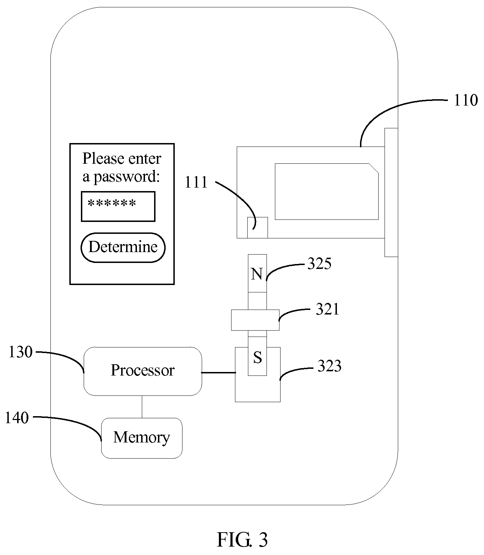

Referring to FIG. 1 and FIG. 3, FIG. 3 is a schematic diagram of another specific implementation manner of the terminal device shown in FIG. 1, where the restricting part 121 is a restricting ring 321, the extensible part 123 includes an electromagnetic coil 323 and a magnetic rod 325, and one end of the magnetic rod 325 is connected to the electromagnetic coil 323.

When fastening, the user first inserts the functional card into the card container 110, and then inserts the card container 110 into the terminal device. Afterwards, the user enters authentication information. The processor 130 compares the authentication information entered by the user with the authentication information stored in the memory 140, so as to determine whether the authentication information is correct. When the authentication information is correct, the electromagnetic coil 323 drives, under control of the processor 130, the magnetic rod 325 to move through the restricting ring 321, so that the magnetic rod 321 stretches into the notch 111.

When unlocking, the user enters authentication information. The processor 130 receives the entered authentication information, and compares the authentication information with the authentication information stored in the memory 140, so as to determine whether the authentication information is correct. When it is determined that the entered authentication information is correct, the electromagnetic coil 323 drives, under control of the processor 130, the magnetic rod 325 to move through the restricting ring 321, so that the magnetic rod 321 moves away from the notch 111.

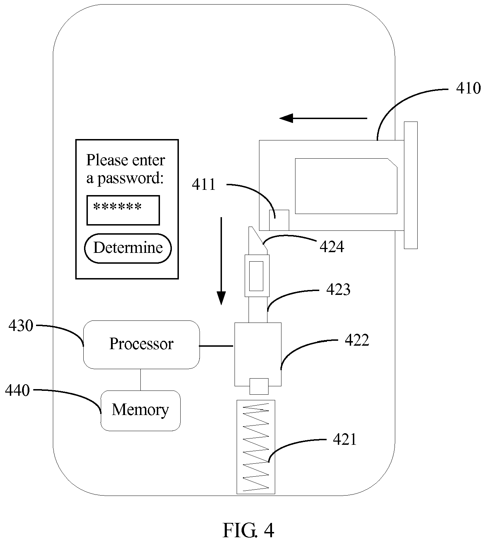

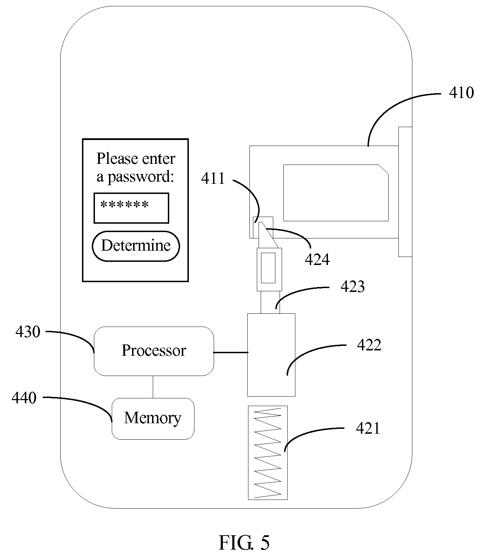

Referring to FIG. 4 and FIG. 5, FIG. 4 is a schematic structural diagram of another implementation manner of a terminal device according to the present application, and FIG. 5 is a schematic diagram of a fastened state in another implementation manner of a terminal device according to the present application. The terminal device in this implementation manner includes: a card container 410, a fastening apparatus 420, and a processor 430.

The card container 410 is configured to contain a functional card, and a notch 411 is disposed on the function card 410.

The fastening apparatus 420 includes a spring 421, an electromagnetic coil 422, and a lock tongue 423, where the lock tongue 423 is an extensible part, one end of the lock tongue 423 has a bevel 424, and the other end of the lock tongue 423 is connected to the spring 421 through the electromagnetic coil 422.

The processor 430 may be a general purpose processor, a digital signal processor (DSP), an application-specific integrated circuit (ASIC), a field programmable gate array (FPGA) or another programmable logic device, a transistor logic device, or a discrete hardware component.

When fastening, a user first inserts the functional card into the card container 410, and then inserts the card container 410 into the terminal device. As shown in FIG. 4, in a process in which the card container 410 is inserted into the terminal device, a part, other than the notch, of an edge of the card container 410 pushes against the bevel 424 of one end of the lock tongue 423. The card container 410 generates downward thrust onto the bevel 424. Under action of the thrust, one end of the lock tongue 423 causes the spring 421 to be elastically deformed, and when the card container 410 moves to a position at which the notch 411 faces the end of the lock tongue 423, the lock tongue 423 loses a force against the card container 410. Under action of the spring 421, the lock tongue 423 stretches into the notch 411, so that the card container 410 and the functional card inside the card container 410 cannot be detached.

When unlocking, the user enters authentication information. The processor 430 receives the entered authentication information, and compares the authentication information with authentication information stored in a memory 440, so as to determine whether the authentication information is correct. When it is determined that the entered authentication information is correct, the electromagnetic coil 422 magnetizes the lock tongue under control of the processor 430, so as to generate a magnetic force, and as shown in FIG. 5, the lock tongue 423 moves away from the notch 411 under action of the magnetic force, thereby unlocking the card container 410. The electromagnetic coil 422 may be an electromagnet coil.

The memory 440 may be a component that store data even in a power outage situation. The memory 440 may include a read-only memory and a random access memory, and provide an instruction and data to the processor 430. Apart of the memory 440 may further include a nonvolatile random access memory (NVRAM).

In the foregoing solution, a notch 411 is disposed on a card container 410; when authentication information is correct, a processor 430 controls an electromagnetic coil to magnetize a lock tongue to generate a magnetic force, so that the lock tongue moves away from the notch under action of the magnetic force, thereby unlocking the card container. In this manner, a functional card can be detached only when the authentication information is correct, and therefore, the functional card is prevented from being randomly detached.

The authentication information in the foregoing embodiment may be a password, fingerprint information, iris information, or the like, where the password may be a random combination of a letter, a number, and an identifier.

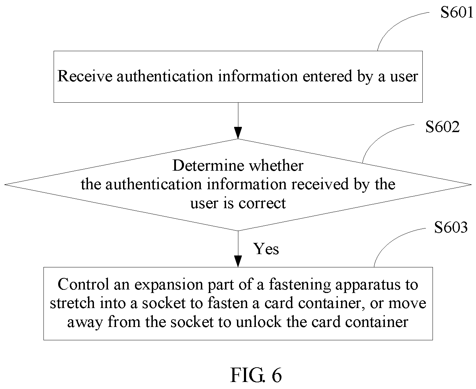

Referring to FIG. 6, FIG. 6 is a flowchart of an implementation manner of a method for fastening or unlocking a functional card of a terminal device according to the present application. In this implementation manner, the method for fastening or unlocking a functional card of a terminal device includes the following steps:
S601: A terminal device receives authentication information entered by a user, where the terminal device may be a mobile phone, a tablet, a wearable device, or a digital camera.

When fastening, the user first inserts a functional card into a card container, and then inserts the card container into the terminal device. Afterwards, the user enters the authentication information, and the terminal device receives the authentication information entered by the user. The functional card may be any one of a SIM card, a USIM card, an SD card, and a TF card. The authentication information entered by the user may be at least one of a password entered by the user, fingerprint information entered by the user, and iris information entered by the user, and the password may be any combination of a letter, a number, and an identifier.

S602: The terminal device determines whether the authentication information entered by the user is correct.

A processor receives the entered authentication information, and compares the authentication information with authentication information stored in a memory, so as to determine whether the authentication information is correct.

S603: If the authentication information entered by the user is correct, control an extensible part of a fastening apparatus to stretch into a notch to fasten a card container, or move away from the notch to unlock the card container.

Specifically, in an implementation manner, if the fastening apparatus further includes a restricting part, and the restricting part can restrict a degree of freedom of the extensible part, so that the extensible part moves along a direction to the notch, then, when the authentication information entered by the user is correct, the extensible part is controlled to stretch into the notch to fasten the card container, or move away from the notch to unlock the card container.

In another specific implementation manner, if the restricting part is a nut, the extensible part includes a motor and a screw rod, and one end of the screw rod is connected to the motor, then, when the authentication information received by the user is correct, the motor is controlled to drive the screw rod to move through the nut, so that the screw rod stretches into the notch or moves away from the notch. If the restricting part is a restricting ring, the extensible part includes an electromagnetic coil and a magnetic rod, and one end of the magnetic rod is connected to the electromagnetic coil, then, when the authentication information received by the user is correct, the electromagnetic coil is controlled to drive the magnetic rod to move through the restricting ring, so that the magnetic rod stretches into the notch or moves away from the notch.

In another implementation manner, if the fastening apparatus includes a spring, an electromagnetic coil, and a lock tongue, where the lock tongue is the extensible part, one end of the lock tongue has a bevel, and the other end of the lock tongue is connected to the spring through the electromagnetic coil, then, when the card container moves, the card container pushes against the bevel of the lock tongue, so that the spring is elastically deformed, and when the notch faces the lock tongue, the lock tongue stretches into the notch under action of the spring, thereby fastening the card container. When unlocking, if the entered authentication information is correct, the electromagnetic coil is controlled to magnetize the lock tongue to generate a magnetic force, so that the lock tongue moves away from the notch under action of the magnetic force, thereby unlocking the card container.

In the foregoing solution, a notch is disposed on a card container, and when entered authentication information is correct, a fastening apparatus is controlled to unlock or fasten the card container by using the notch. In this manner, a functional card can be detached only when the entered authentication information is correct, and therefore, the functional card is prevented from being randomly detached.

In the several implementation manners provided in the present application, it should be understood that the disclosed apparatus and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed.

If the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the method described in the embodiment of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A terminal device, wherein the terminal device comprises a card container, a fastening apparatus, and a processor, wherein:
the card container is configured to contain a functional card, and the card container has a notch;
the fastening apparatus comprises an extensible part, and the extensible part stretches into the notch to fasten the card container, or moves away from the notch to unlock the card container; and
the processor is configured to: determine, according to authentication information entered by a user, whether the authentication information is correct, and control, when the authentication information is correct, the extensible part of the fastening apparatus to stretch into the notch to fasten the card container, or move away from the notch to unlock the card container.

2. The terminal device according to claim 1, wherein the fastening apparatus further comprises a restricting part, and the restricting part restricts a degree of freedom of the extensible part, so that the extensible part moves along a direction to the notch; and under control of the processor, the extensible part stretches into the notch to fasten the card container, or moves away from the notch to unlock the card container.

3. The terminal device according to claim 2, wherein the restricting part is a nut, the extensible part comprises a motor and a screw rod, one end of the screw rod is connected to the motor, and the motor drives, under control of the processor, the screw rod to move through the nut, so that the screw rod stretches into the notch to fasten the card container, or moves away from the notch to unlock the card container.

4. The terminal device according to claim 2, wherein the restricting part is a restricting ring, the extensible part comprises an electromagnetic coil and a magnetic rod, one end of the magnetic rod is connected to the electromagnetic coil, and the electromagnetic coil drives, under control of the processor, the magnetic rod to move through the restricting ring, so that the magnetic rod stretches into the notch or moves away from the notch.

5. The terminal device according to claim 1, wherein the fastening apparatus further comprises a spring and an electromagnetic coil, the extensible part is a lock tongue, one end of the lock tongue has a bevel, and the other end of the lock tongue is connected to the spring through the electromagnetic coil;
when the card container moves, the card container pushes against the bevel of the lock tongue, so that the spring is elastically deformed, and when the notch faces the lock tongue, the lock tongue stretches into the notch under action of the spring, thereby fastening the card container; and
wherein the processor is configured to control the extensible part of the fastening apparatus to stretch into the notch to fasten the card container, or move away from the notch to unlock the card container is specifically:
the electromagnetic coil magnetizes the lock tongue under control of the processor to generate a magnetic force, the lock tongue moves away from the notch under action of the magnetic force, thereby unlocking the card container.

6. The terminal device according to any one of claims 1 to 5, wherein the authentication information entered by the user is at least one of a password entered by the user, fingerprint information entered by the user, and iris information entered by the user.

7. The terminal device according to any one of claims 1 to 6, wherein the functional card is any one of a SIM card, a USIM card, an SD card, and a TF card.

8. The terminal device according to any one of claims 1 to 7, wherein the terminal device is a mobile phone, a tablet, a wearable device, or a digital camera.

9. A method for fastening or unlocking a functional card of a terminal device, wherein the terminal device comprises a card container and a fastening apparatus, wherein the card container is configured to contain the functional card, and the card container has a notch; the fastening apparatus comprises an extensible part, and the extensible part stretches into the notch to fasten the card container, or moves away from the notch to unlock the card container; and
the method comprises:
receiving authentication information entered by a user;
determining whether the authentication information entered by the user is correct; and
if the authentication information entered by the user is correct, controlling the extensible part of the fastening apparatus to stretch into the notch to fasten the card container, or move away from the notch to unlock the card container.

10. The method according to claim 9, wherein the fastening apparatus further comprises a restricting part, and the restricting part restricts a degree of freedom of the extensible part, so that the extensible part moves along a direction to the notch, wherein the restricting part is a nut, the extensible part comprises a motor and a screw rod, and one end of the screw rod is connected to the motor; and the step of controlling the extensible part of the fastening apparatus to stretch into the notch to fasten the card container, or move away from the notch to unlock the card container is specifically:
controlling the motor to drive the screw rod to move through the nut, so that the screw rod stretches into the notch to fasten the card container, or moves away from the notch to unlock the card container.

11. The method according to claim 9, wherein the fastening apparatus further comprises a restricting part, and the restricting part restricts a degree of freedom of the extensible part, so that the extensible part moves along a direction to the notch, wherein the restricting part is a restricting ring, the extensible part comprises an electromagnetic coil and a magnetic rod, and one end of the magnetic rod is connected to the electromagnetic coil; and the step of controlling the extensible part of the fastening apparatus to stretch into the notch to fasten the card container, or move away from the notch to unlock the card container is specifically:
controlling the electromagnetic coil to drive the magnetic rod to move through the restricting ring, so that the magnetic rod stretches into the notch to fasten the card container, or moves away from the notch to unlock the card container.

12. The method according to claim 9, wherein the fastening apparatus further comprises a spring and an electromagnetic coil, the extensible part is a lock tongue, one end of the lock tongue has a bevel, and the other end of the lock tongue is connected to the spring through the electromagnetic coil; when the card container moves, the card container pushes against the bevel of the lock tongue, so that the spring is elastically deformed, and when the notch faces the lock tongue, the lock tongue stretches into the notch under action of the spring to fasten the card container; and
the step of controlling the extensible part of the fastening apparatus to stretch into the notch to fasten the card container, or move away from the notch to unlock the card container is specifically:
controlling the electromagnetic coil to magnetize the lock tongue to generate a magnetic force, so that the lock tongue moves away from the notch under action of the magnetic force to unlock the card container.
